# EUROPÄISCHE PATENTSCHRIFT

(11) **EP 2 041 359 B1**
(45) Veröffentlichungstag und Bekanntmachung des Hinweises auf die Patenterteilung: **31.03.2010**
(21) Anmeldenummer: 07786768.7
(22) Anmeldetag: 20.06.2007
(51) Int. Cl.: D06F 58/20, D06F 58/28

(54) **HAUSGERÄT ZUR PFLEGE VON WÄSCHESTÜCKEN UND VERFAHREN ZUM LEITEN VON KÜHLLUFT IN EINEM SOLCHEN HAUSGERÄT**
DOMESTIC DEVICE FOR THE CARE OF LAUNDRY ITEMS AND METHOD FOR PASSING COOLING AIR INTO SUCH A DEVICE
APPAREIL MÉNAGER POUR L'ENTRETIEN DU LINGE ET PROCÉDÉ DE GUIDAGE DE L'AIR DE REFROIDISSEMENT DANS UN APPAREIL MÉNAGER DE CE TYPE

(30) Priorität: 06.07.2006 DE 102006031353
(43) Veröffentlichungstag der Anmeldung: 01.04.2009
(73) Patentinhaber: BSH Bosch und Siemens Hausgeräte GmbH, 81739 München (DE)
(72) Erfinder: STEFFENS, Günter, 14624 Dallgow-Döberitz (DE); STOLZE,Andreas, 14612 Falkensee (DE); GRUNERT, Klaus, 13465 Berlin (DE)
(86) Internationale Anmeldenummer: PCT/EP2007/056113
(87) Internationale Veröffentlichungsnummer: WO 2008/003590

(56) Entgegenhaltungen:
- EP-A- 1 541 744
- JP-A- 2 109 598
- JP-A- 54 106 960

## Beschreibung

Die Erfindung betrifft ein Hausgerät zur Pflege von Wäschestücken, mit einem Gehäuse, worin ein Behälter zur Aufnahme von Wäschestücken, eine Prozessluftführung, welche mit dem Behälter gekoppelt ist, wobei Prozessluft durch den Behälter strömt, ein Wärmetauscher, welcher mit der Prozessluftführung gekoppelt und zur Entfeuchtung der aus dem Behälter austretenden Prozessluft ausgebildet ist, eine Heizung, welche mit der Prozessluftführung gekoppelt und zur Aufheizung der Prozessluft ausgebildet ist, und eine Kühlluftführung zur Führung von Kühlluft aus einer Umgebung des Hausgeräts zum Kühlen des Wärmetauschers angeordnet sind.

Mit dem Begriff "Prozessluftführung" ist insbesondere ein geschlossener Prozessluftkreislauf, wie er bei einem Umlufttrockner ausgebildet ist, bezeichnet. Allgemein ist mit dem Begriff "Hausgerät zur Pflege von Wäschestücken" jedes derartige Gerät umfasst, das zum Trocken von Wäsche eingerichtet ist, insbesondere ein Wäschetrockner oder ein Waschtrockner. Die Prozessluftführung soll im Folgenden insbesondere einen Luftkanal, ein Gebläse und andere Bauteile umfassen, durch die im Betrieb Prozessluft strömt; entsprechend soll die Kühlluftführung einen Luftkanal, ein Gebläse und andere Bauteile umfassen, durch welche im Betrieb Kühlluft strömt.

Bei einem herkömmlichen Hausgerät der eingangs beschriebenen Gattung, insbesondere einem herkömmlichen Wäschetrockner wie z.B. JP 02 302 299 A, ist das Energiemanagement während des Betriebs relativ unzureichend. Einerseits benötigt gerade ein Wäschetrockner ein Mindestmaß an Energie, um einen gegebenen Wäscheposten mit üblicher Feuchte (wie sie sich bei einer vorhergehenden Behandlung in einer herkömmlichen Waschmaschine ergibt) zu trocknen. Dieses Mindestmaß kann unterschritten werden, wenn der Wäschetrockner eine Wärmepumpe enthält und derart jedenfalls einen Teil der zum Verdampfen von Feuchte aufgewendeten Energie zurückgewinnen kann. Andererseits ist bei einem herkömmlichen Wäschetrockner, ob mit oder ohne Wärmepumpe, ein gegenüber dem Minimum erhöhter Energiebedarf gegeben aufgrund zusätzlicher Wärmeleckagen, die in mehr oder weniger großem Umfang stets vorhanden sind.

Daher ist es Aufgabe der vorliegenden Erfindung, ein Hausgerät zur Pflege von Wäschestücken zu schaffen, mit welchem das Energiemanagement im Betrieb verbessert werden kann. Des Weiteren ist es Aufgabe der vorliegenden Erfindung, ein Verfahren zu schaffen, bei dem die Kühlluftführung im Hinblick auf ein verbessertes Energiemanagement in einem Hausgerät zur Pflege von Wäschestücken verbessert ist.

Diese Aufgabe wird durch ein Hausgerät, welches die Merkmale nach Patentanspruch 1 aufweist, und ein Verfahren, welches die Merkmale nach Patentanspruch 14 aufweist, gelöst. Bevorzugt Weiterbildungen des Hausgeräts und des Verfahrens sind in den abhängigen Patentansprüchen bzw. Patentanspruch 15 angegeben.

Das erfindungsgemäße Hausgerät zur Pflege von Wäschestücken, umfasst ein Gehäuse, worin ein Behälter zur Aufnahme von Wäschestücken, eine Prozessluftführung, welche mit dem Behälter gekoppelt ist, wobei Prozessluft durch den Behälter strömt, ein Wärmetauscher, welcher mit der Prozessluftführung gekoppelt und zur Entfeuchtung der aus dem Behälter austretenden Prozessluft ausgebildet ist, eine Heizung, welche mit der Prozessluftführung gekoppelt und zur Aufheizung der Prozessluft ausgebildet ist, und eine Kühlluftführung zur Führung von Kühlluft aus einer Umgebung des Hausgeräts zum Kühlen des Wärmetauschers angeordnet sind, gemäß Anspruch 1.

Dadurch wird betriebszustandsabhängig ein optimales Energiemanagement des Hausgeräts ermöglicht. Die während eines Trocknungsprozesses ausgebildete Wärme im Prozessluftstrom kann somit phasenabhängig abgeführt oder für eine weitere Verwendung zumindest anteilig im Hausgerät selbst genutzt werden.

Eine bevorzugte Weiterbildung des Hausgeräts zeichnet sich dadurch aus, dass die Luftleitvorrichtung derart einstellbar ist, dass zusätzlich wahlweise im Wesentlichen keine Kühlung des Wärmetauschers erfolgt. Damit kann - insbesondere bei einer Betriebsaufnahme des Hausgeräts, eine schnelle Aufheizung der funktionellen Komponenten des Hausgeräts erzielt, und können in einer solchen Betriebsphase unerwünschte Wärmeverluste vermieden werden.

Vorzugsweise ist die Luftleitvorrichtung dem Wärmetauscher nachgeordnet angeordnet.

Die Luftleitvorrichtung umfasst in bevorzugter Weise eine Ventilvorrichtung, welche zum zumindest teilweisen Absperren oder Freigeben von Luftauslässen zur entsprechenden Leitung der Kühlluft ausgebildet ist. Es ist somit bevorzugt lediglich eine Luftleitvorrichtung und insbesondere lediglich eine Ventilvorrichtung erforderlich, um abhängig von der momentanen Betriebsphase ein situationsabhängiges und bedarfsgerechtes Leiten der Kühlluft ermöglichen zu können. Die Ausgestaltung des Hausgeräts kann somit bauteilminimiert ermöglicht werden und die individuelle Leitung der Kühlluft kann dadurch aufwandsarm und relativ einfach konzipiert werden.

Vorzugsweise münden die verschiedenen Luftauslässe in einen gemeinsamen Knotenpunkt bzw. in einen gemeinsamen Kreuzungspunkt, an welchem die Ventilvorrichtung bevorzugt angeordnet ist. Das ganze Konzept betreffend eine optimale Leitung der Kühlluft in verschiedenen Betriebsphasen kann somit Platz sparend und auch örtlich kompakt ausgebildet werden, wodurch beispielsweise auch eine Reparatur und ein Austausch sowie eine Wartung der Luftleitvorrichtung aufwandsarm durchgeführt werden kann.

Vorzugsweise weist das Hausgerät eine Steuereinheit auf, welche zur Steuerung der Ventilvorrichtung ausgebildet ist. Das Steuern der Ventilvorrichtung kann dabei bevorzugt zeitabhängig und/oder temperaturabhängig durchgeführt werden.

Vorzugsweise umfasst das Hausgerät eine erste Temperaturmesseinheit, welche zur Erfassung der Temperatur der Wäschestücke in dem Behälter ausgebildet und entsprechend angeordnet ist, wobei abhängig von dieser Temperatur der Wäschestücke die Ventilvorrichtung durch die Steuereinheit steuerbar ist. Anstatt oder zusätzlich kann vorgesehen sein, dass das Hausgerät eine zweite Temperaturmesseinheit aufweist, welche zur Erfassung der Temperatur der Kühlluft nach dem Wärmetauscher ausgebildet ist, wobei abhängig von dieser Temperatur die Ventilvorrichtung mittels der Steuereinheit steuerbar ist. Vorzugsweise ist zumindest eine der Temperaturmesseinheiten ein Temperatursensor. Es kann auch vorgesehen sein, dass zumindest eine der Temperaturmesseinheiten, bevorzugt beide Temperaturmesseinheiten, als Thermostat ausgebildet ist.

Vorzugsweise ist in dem Hausgerät in der Kühlluftführung ein Kühlluftgebläse enthalten ist, wobei die Luftleitvorrichtung benachbart zum Kühlluftgebläse angeordnet ist. Der Knotenpunkt, an welchem die Luftauslässe zusammengeführt sind, ist bevorzugt im Bereich des Kühlluftgebläses angeordnet.

Des Weiteren umfasst das Hausgerät in bevorzugter Weise ein Prozessluftgebläse, durch welches die Prozessluft in der Prozessluftführung in einer Strömungsrichtung gefördert werden kann. Die Prozessluftführung und die Kühlluftführung sind als separate Systeme ausgebildet, wobei der Wärmetauscher bevorzugt als Kreuzstrom-Wärmetauscher ausgebildet ist.

Das Hausgerät umfasst vorzugsweise eine Antriebseinheit, insbesondere einen Motor, welche zum Antrieb des Behälters und des Kühlluftgebläses sowie auch des Prozessluftgebläses ausgebildet ist. Indem lediglich ein Motor zum Antrieb dieser drei Komponenten vorgesehen ist, kann eine kostengünstige Ausgestaltung ermöglicht werden.

Vorzugsweise sind drei Betriebsphasen des Hausgeräts und damit auch der Trocknungsprozess gekennzeichnet während des Zirkulierens von Prozessluft durch die Prozessluftführung bei gleichzeitigem Beheizen der Prozessluft mittels der Heizung durch eine Aufheizphase, welche die erste Trocknungsphase bzw. die erste Betriebsphase charakterisiert, eine Beharrungsphase, welche eine zweite Trocknungsphase bzw. die zweite Betriebsphase charakterisiert und eine Endphase, welche eine dritte Trocknungsphase bzw. eine dritte Betriebsphase charakterisiert. In der ersten Betriebsphase und somit in der Aufheizphase ist es bevorzugt, so wenig Energie wie möglich an die Umgebung des Hausgeräts abzugeben. In dieser Phase ist es für das Energiemanagement des Hausgeräts deshalb besonders effizient, wenn im Wesentlichen keine Kühlung des Wärmetauschers durchgeführt wird und die Luftleitvorrichtung entsprechend eingestellt ist. Dadurch kann sich in dieser Phase insbesondere der Wärmetauscher aufheizen. In der Beharrungsphase und somit in der zweiten Betriebsphase arbeitet der Wärmetauscher im Wesentlichen in seinem optimalen Betriebszustand. Er hat sich erwärmt und eine Kühlung Zur Kondensation von Feuchte aus der Prozessluft wird durchgeführt, wobei dazu die Luftleitvorrichtung in dieser Phase entsprechend eingestellt wird. Die den Wärmetauscher umströmt und/oder durchströmt habende Kühlluft wurde durch den Wärmetauscher erwärmt, ist jedoch noch nicht so warm, dass unter ihrer Verwendung die Energiebilanz im Hausgerät verbessert werden könnte. In dieser Phase ist es somit vorteilhaft, diese erwärmte Kühlluft zumindest anteilig, insbesondere vollständig, aus dem Hausgerät an die Umgebung abzuführen. In der Endphase und somit in der dritten Betriebsphase ist die den Wärmetauscher um- und/oder durchströmt habende Kühlluft so warm, dass sie zur Verbesserung der Energiebilanz in dem Innenraum des Hausgeräts verwendet und genutzt werden kann, und somit in vorteilhafter Weise beispielsweise an die Außenwand bzw. die Oberfläche des Behälters zur Aufnahme von Wäschestücken, leitbar ist. Auch hier wird die Luftleitvorrichtung entsprechend eingestellt. Darüber hinaus kann in dieser dritten Betriebsphase die erwärmte Kühlluft des Weiteren auch an andere Komponenten, insbesondere Kunststoffteile des Hausgeräts im Inneren, geleitet werden, um auch an diese eine entsprechende Wärmeenergie abgeben zu können und das Energiemanagement zu verbessern. Zum Beenden des Trocknungsprozesses bzw. des Verfahrens (vierte Betriebsphase) wird die vorher kontinuierlich oder intermittierend benutzte Heizung abgeschaltet, so dass sich der Prozessluftstrom, das Hausgerät und das getrocknete Gut abkühlen können. Dabei ist es vorteilhaft, den Wärmetauscher zum Abkühlen zu nutzen, indem die weiterhin durch ihn geführte Kühlluft wieder aus dem Hausgerät herausgeführt wird.

Das Hausgerät kann eine Wärmepumpe aufweisen, die insbesondere als Peltier-Wärmepumpe ausgebildet ist. Bei der Ausgestaltung als Peltier-Wärmepumpe sind dann zwei Wärmetauscher vorgesehen, von denen einer mir einer Kaltseite eines Peltier-Moduls als und der zweite mit einer Warmseite des Peltier-Moduls kontaktiert ist.

Bei einem erfindungsgemäßen Verfahren zum Leiten von Kühlluft in einem Hausgerät zur Pflege von Wäschestücken, umfassend ein Gehäuse, worin ein Behälter zur Aufnahme von Wäschestücken, eine Prozesslufttührung, welche mit dem Behälter gekoppelt ist, wobei Prozessluft durch den Behälter strömt, ein Wärmetauscher, welcher mit der Prozessluftführung gekoppelt und zur Entfeuchtung der aus dem Behälter austretenden Prozessluft ausgebildet ist, eine Heizung, welche mit der Prozessluftführung gekoppelt und zur Aufheizung der Prozessluft ausgebildet ist, und eine Kühlluftführung zur Führung von Kühlluft aus einer Umgebung des Hausgeräts zum Kühlen des Wärmetauschers angeordnet sind, gemäß Anspruch 14, zeichnet sich das Verfahren dadurch aus, dass Prozessluft durch die Prozessluftführung zirkuliert und mittels der Heizung beheizt wird, und dabei die Luftleitvorrichtung zunächst derart eingestellt wird, dass die dem Wärmetauscher zugeführte Kühlluft direkt aus dem Hausgerät in die Umgebung geleitet wird, und anschließend derart eingestellt wird, dass die dem Wärmetauscher zugeführte Kühlluft in das Hausgerät und durch die Schlitze in die Umgebung geleitet wird, und schließlich die Entfeuchtung durch Beenden des Beheizens der Prozessluft beendet wird.

Dadurch wird das situationsabhängige Leiten der Kühlluft in dem Hausgerät im Hinblick auf ein verbessertes Energiemanagement während des Betriebs und insbesondere während des Trocknungsprozesses der Wäschestücke ermöglicht.

Eine bevorzugte Ausführung des erfindungsgemäßen Verfahrens in einem Hausgerät, gemäß Anspruch 15, zeichnet sich dadurch aus, dass Prozessluft durch die Prozessluftführung zirkuliert und mittels der Heizung beheizt wird, und dabei die Luftleitvorrichtung zunächst derart eingestellt wird, dass zwecks Aufheizung des Hausgeräts keine Kühlung des Wärmetauschers erfolgt, dann derart eingestellt wird, dass die dem Wärmetauscher zugeführte Kühlluft direkt aus dem Hausgerät in die Umgebung geleitet wird, und anschließend derart eingestellt wird, dass die dem Wärmetauscher zugeführte Kühlluft in das Hausgerät und durch die Schlitze in die Umgebung geleitet wird, und schließlich die Entfeuchtung durch Beenden des Beheizens der Prozessluft beendet wird.

Beim Verfahren gemäß einer dieser Ausgestaltungen ist es bevorzugt, dass zum Beenden der Entfeuchtung die Luftleitvorrichtung derart eingestellt wird, dass die dem Wärmetauscher zugeführte Kühlluft direkt aus dem Hausgerät in die Umgebung geleitet wird. Dies hat den Vorteil, dass der Wärmetauscher zur schnellen Abkühlung des Hausgeräts und der getrockneten Wäschestücke genutzt wird.

Bevorzugten Ausgestaltungen des Hausgeräts entsprechen in jedem Falle bevorzugte Ausgestaltungen des Verfahrens, und umgekehrt.

Ein Ausführungsbeispiel der Erfindung wird nachfolgend anhand einer schematischen Zeichnung näher erläutert.

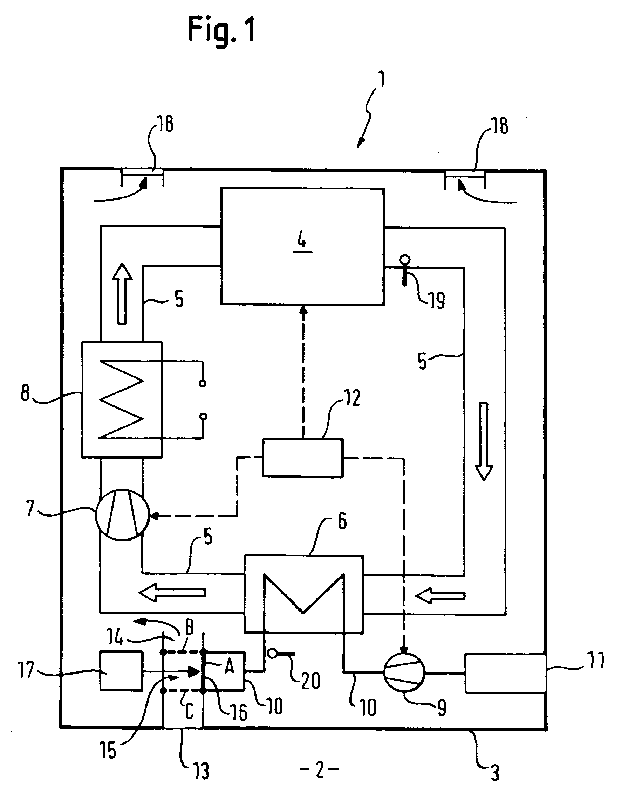

Die einzige Fig. 1 zeigt in einer vereinfachten Blockbilddarstellung ein als Wäschetrockner 1 ausgebildetes Hausgerät 1 zur Pflege von Wäschestücken. Der Wäschetrockner 1 ist als Umlufttrockner konzipiert, und in Fig. 1 sind lediglich die für das Verständnis nachfolgender Ausführungen wesentlichen Komponenten gezeigt. Der Wäschetrockner 1 steht in einer Umgebung 2, von welcher er sich durch ein Gehäuse 3 abgrenzt. Dabei weist der Wäschetrockner 1 eine Trommel 4 bzw. einen Behälter 4 zur Aufnahme von Wäschestücken auf, welcher in einer Prozessluftführung 5 angeordnet ist. Die Prozessluftführung 5 ist in ihrer grundlegenden Ausgestaltung als geschlossener Prozessluftkreislauf 5 ausgebildet. Des Weiteren umfasst der Wäschetrockner 1 einen Wärmetauscher 6, welcher in der Prozessluftführung 5 angeordnet ist und zur Entfeuchtung der aus dem Behälter 4 austretenden, in der Prozessluftführung 5 entsprechend der dort eingezeichneten Pfeile strömenden Prozessluft ausgebildet ist. Einzelheiten hinsichtlich der Abführung des im Wärmetauscher 6 angefallenen und von der Prozessluft abzutrennenden Kondensates sind der Übersicht halber nicht dargestellt. Zur Umwälzung der Prozessluft in der Prozessluftführung 5 ist ein Prozessluftgebläse 7 vorgesehen. Eine Heizung 8 in der Prozessluftführung 5 dient zur Erwärmung der Prozessluft vor ihrem Eintritt in die Trommel 4.

Zur Kühlung des Wärmetauschers 6 umfasst der Wäschetrockner 1 ein Kühlluftgebläse 9, welches in einer Kühlluftführung10 angeordnet ist. Das Kühlluftgebläse 9 ist dem Wärmetauscher 6 vorgeordnet positioniert. Durch das Kühlluftgebläse wird im Betrieb des Hausgeräts 1 Luft aus der Umgebung 2 durch einen Lufteinlass 11 angesaugt und durch die Kühlluftführung 10 durch den Wärmetauscher 6 geleitet. Die Prozessluftführung 5 und die Kühlluftführung 10 sind voneinander separate Luftführungssysteme, wobei insbesondere die Kühlluftführung 10 in teilweise lediglich schematisch angedeutet ist. Der Wärmetauscher 6 ist als Kreuzstrom-Wärmetauscher 6 ausgebildet.

Des Weiteren umfasst der Wäschetrockner 1 eine nur schematisch gezeichnete Antriebseinheit 12, namentlich einen Elektromotor 12, welche zum Antrieb sowohl des Behälters 2 als auch des Kühlluftgebläses 9 und des Prozessluftgebläses 7 ausgebildet ist.

Der Wäschetrockner 1 umfasst des Weiteren einen ersten Luftauslass 13, durch welchen Kühlluft aus der Kühlluftführung 10 direkt in die Umgebung 2 entlassbar ist. Durch einen zweiten Luftauslass 14 ist Kühlluft aus der Kühlluftführung ins Innere des Gehäuses 3 entlassbar. Die Luftauslässe 13 und 14 münden an einem gemeinsamen Knotenpunkt 15 in die Kühlluftführung 10.

In diesem Knotenpunkt 15 ist eine Luftleitleitvorrichtung 16, 17 angeordnet, welche eine Ventilvorrichtung 16 umfasst, welche als Drei-Wege-Klappe 16 ausgebildet ist. Die Ventilvorrichtung 16 ist mit einer Steuereinheit 17 zum Steuern der Luftleitvorrichtung 16, 17 verbunden.

Die Steuerung der Ventilvorrichtung 16 durch die Steuereinheit 17 erfolgt zeitabhängig und/oder temperaturabhängig. Die zeitabhängige Steuerung erfolgt dabei in Abhängigkeit eines zeitlichen Fortschreitens eines Trocknungsprozesses des Wäschetrockners 1. Die temperaturabhängige Steuerung erfolgt bevorzugt in Abhängigkeit einer erfassten momentanen Temperatur der Wäschestücke in dem Behälter 2 und/oder in Abhängigkeit der Kühllufttemperatur, welche nach dem Um- und/oder Durchströmen des Wärmetauschers 6 gemessen wird.

Während des Betriebs des Wäschetrockners 1 und somit während des Trocknungsprozesses der Wäschestücke in dem Behälter 4 ist die Heizung 8 im wesentlichen dauernd, wenn auch je nach Ausbildung des Hausgeräts 1 zwecks Regelung der abgegebenen Wärme sowie der Temperatur in der Prozessluft intermittierend, in Betrieb. Dabei wird eine erste Betriebsphase erreicht, welche als Aufheizphase bezeichnet wird und in der im Hinblick auf die Wärmebilanz im Wäschetrockner 1 und somit auf dessen Energiemanagement möglichst wenig Energie an die Umgebung 2 und somit nach außen abgeführt werden soll. In dieser ersten Betriebsphase wird die Ventilvorrichtung 16 so angesteuert, dass sie den Knotenpunkt 15 dahingehend verschließt, dass die Luftauslässe 13 und 14 abgesperrt sind und somit Kühlluft nicht in diese gelangen kann. In dieser Stellung ist die Ventilvorrichtung 16 in der Figur 1 gezeigt. In der ersten Betriebsphase wird somit auch bei laufendem Kühlluftgebläse 9 praktisch kein Kühlluftstrom erzeugt, da das gemäß dem Ansaugprinzip arbeitende Kühlluftgebläse 9 aufgrund der geschlossenen Ventilvorrichtung 16 keinen durchziehenden Luftstrom erzeugen kann. Die Stellung der Ventilvorrichtung 16 in dieser ersten Betriebsphase ist durch die Position A (durchgezogene Linie) gekennzeichnet. In dieser Phase erwärmt sich der Wärmetauscher 6, ohne dass in wesentlichem Umfang Kondensation von Feuchte stattfindet.

Im fortschreitenden Trocknungsprozess wird dann eine weitere Trocknungsphase bzw. die zweite Betriebsphase erreicht, in der der Wärmetauscher 6 im Wesentlichen in einem Optimum betrieben wird und Feuchte aus dem Prozessluftstrom auskondensiert. In dieser Phase wird die Ventilvorrichtung 11 a derart angesteuert, dass sie von der Position A in die Position B übergeführt und somit allein eine Absperrung des Luftauslasses 14 erreicht wird. Aufgrund der dadurch erzeugten Öffnung im Knotenpunkt 10 wird durch das laufende Kühlluftgebläse 9 somit ein Kühlluftstrom erzeugt und eine Kühlung des Wärmetauschers 6 erreicht. Die diesen durchströmende Kühlluft erwärmt sich dabei, ist jedoch nach dem Wärmetauscher 6 noch nicht so warm, dass sie im Wäschetrockner 1 zur weiteren Nutzung im Hinblick auf die Verbesserung der Wärmebilanz sinnvoll genutzt werden könnte. Daher ist es vorteilhaft, in dieser zweiten Betriebsphase diese erwärmte Kühlluft durch den Luftauslass 13 in die Umgebung 2 abzuleiten.

Bei weiter fortschreitendem Trocknungsprozess wird dann eine dritte Betriebsphase bzw. eine dritte Trocknungsphase, die Endphase, erreicht. In dieser Phase hat sich der Wärmetauscher 6 weiter erwärmt, wodurch sich auch die Kühlluft stärker erwärmt. Nach dem Durchströmen des Wärmetauschers 6 ist die Kühlluft so warm, dass sie zur Verbesserung der Wärmebilanz in dem Wäschetrockner 1 genutzt werden kann und deshalb in das Innere des Wäschetrockners 1 geleitet wird. Dazu wird die Ventilvorrichtung 16 derart angesteuert, dass sie vom Zustand bzw. der Position B in die Position C übergeht. Dadurch ist der Luftauslass 13 verschlossen, und die aufgeheizte Kühlluft gelangt über den Luftauslass 14 in das Gehäuse 3, wo sie alle darin befindlichen Komponenten umströmen kann. Dabei gibt sie Wärme ab, kompensiert so Wärmeleckagen und verbessert die Energiebilanz des Wäschetrockners 1. Durch Schlitze 18 in dem Gehäuse 3, welche Schlitze 18 sich gemäß üblicher Praxis in einer einem Benutzer des Wäschetrockners 1 nicht ohne weiteres sichtbaren Rückwand des Gehäuses 3 befinden, gelangt diese Kühlluft schließlich in die Umgebung 2 zurück.

Zum Beenden des Trocknungsprozesses bzw. des Verfahrens (vierte Betriebsphase) wird die vorher kontinuierlich oder intermittierend benutzte Heizung 8 abgeschaltet, so dass sich die Prozessluft, der Wäschetrockner 1 als Ganzes und das getrocknete Gut in der Trommel 4 abkühlen können. Dabei ist es vorteilhaft, den Wärmetauscher 6 zum Abkühlen zu nutzen, indem die weiterhin durch ihn geführte Kühlluft wieder in beschriebener Weise direkt in die Umgebung 2 des Wäschetrockners 1 geführt wird.

Eine erste Temperaturmesseinheit 19 misst die Temperatur des der Trommel 4 entströmenden Prozessluftstroms, und damit die Temperatur der Wäschestücke in der Trommel 4. Eine zweite Temperaturmesseinheit 20 misst die Temperatur der dem Wärmetauscher 6 entströmenden Kühlluft. Aus diesen Temperaturen wird, insbesondere durch die Steuereinheit 17, ermittelt, welche Betriebsphase vorliegt, und die Ventilvorrichtung 16 entsprechend gesteuert. Beide Temperaturmesseinrichtungen 19 und 20 sind Thermostaten oder Temperatursensoren an sich bekannter Art.

## Patentansprüche

1. Hausgerät (1) zur Pflege von Wäschestücken, umfassend ein Gehäuse (3), worin ein Behälter (4) zur Aufnahme von Wäschestücken, eine Prozessluftführung (5), welche mit dem Behälter (4) gekoppelt ist, wobei Prozessluft durch den Behälter (4) strömt, ein Wärmetauscher (6), welcher mit der Prozessluftführung (5) gekoppelt und zur Entfeuchtung der aus dem Behälter (4) austretenden Prozessluft ausgebildet ist, eine Heizung (8), welche mit der Prozessluftführung (5) gekoppelt und zur Aufheizung der Prozessluft ausgebildet ist, eine Kühlluftführung (10) zur Führung von Kühlluft aus einer Umgebung (2) des Hausgeräts (1) zum Kühlen des Wärmetauschers (6), ein erster Luftauslass (13), durch welchen Kühlluft aus der Kühlluftführung (10) direkt in die Umgebung entlassbar ist, und ein zweiter Luftauslass (14), durch welchen Kühlluft aus der Kühlluftführung (10) in das Hausgerät (1) und durch Schlitze (18) in dem Gehäuse (3) zurück in die Umgebung (2) leitbar ist, angeordnet sind, **gekennzeichnet durch** eine in der Kühlluftführung (10) angeordnete Luftleitvorrichtung (16, 17), welche derart einstellbar ist, dass wahlweise die dem Wärmetauscher (6) zugeführte Kühlluft zumindest anteilig **durch** den ersten Luftauslass (13) oder zumindest anteilig **durch** den zweiten Luftauslass (14) leitbar ist.

2. Hausgerät (1) nach Anspruch 1, bei dem die Luftleitvorrichtung (16, 17) derart einstellbar ist, das zusätzlich wahlweise im Wesentlichen keine Kühlung des Wärmetauschers (6) erfolgt.

3. Hausgerät (1) nach einem der vorigen Ansprüche, bei welchem die Luftleitvorrichtung (16, 17) dem Wärmetauscher (6) nachgeordnet angeordnet ist.

4. Hausgerät (1) nach einem der vorigen Ansprüche, bei welchem die Luftleitvorrichtung (16, 17) eine Ventilvorrichtung (16) umfasst, welche zum zumindest teilweisen Absperren oder Freigeben von beiden Luftauslässen (13, 14) zur Leitung der Kühlluft ausgebildet ist.

5. Hausgerät (1) nach Anspruch 4, bei welchem die Luftauslässe (13, 14) in einen gemeinsamen Knotenpunkt (15) zünden, an welchem die Ventilvorrichtung (16) angeordnet ist.

6. Hausgerät (1) nach einem der Ansprüche 4 und 5, bei welchem die Ventilvorrichtung (16) durch eine Steuereinheit (17) steuerbar ist.

7. Hausgerät (1) nach Anspruch 6, bei welchem die Ventilvorrichtung (16) zeitabhängig und/oder temperaturabhängig steuerbar ist.

8. Hausgerät (1) nach Anspruch 7, bei welchem eine erste Temperaturmesseinheit (19) zur Erfassung der Temperatur der Wäschestücke angeordnet ist, wobei abhängig von dieser Temperatur der Wäschestücke die Ventilvorrichtung (16) steuerbar ist.

9. Hausgerät (1) nach einem der Ansprüche 7 und 8, bei welchem eine zweite Temperaturmesseinheit (20) zur Erfassung der Temperatur der Kühlluft nach dem Wärmetauscher (6) angeordnet ist, wobei abhängig von dieser Temperatur der Kühlluft die Ventilvorrichtung (16) steuerbar ist.

10. Hausgerät (1) nach einem der Ansprüche 8 und 9, bei welchem zumindest eine der Temperaturmesseinheiten (19, 20) ein Temperatursensor oder ein Thermostat ist.

11. Hausgerät (1) nach einem der vorigen Ansprüche, bei welchem in der Kühlluftführung (10) ein Kühlluftgebläse (9) enthalten ist, wobei die Luftleitvorrichtung (16, 17) benachbart zum Kühlluftgebläse (9) angeordnet ist.

12. Hausgerät (1) nach einem der vorigen Ansprüche, bei welchem in der Prozessluftführung (5) ein Prozessluftgebläse (7) enthalten ist.

13. Hausgerät (1) nach Anspruch 11 und Anspruch 12, welches eine Antriebseinheit (12), insbesondere einen Motor, aufweist, welcher zum Antrieb des Behälters (4), des Kühlluftgebläses (9) und des Prozessluftgebläses (7) ausgebildet ist.

14. Verfahren zum Leiten von Kühlluft in einem Hausgerät (1) zur Pflege von Wäschestücken, umfassend ein Gehäuse (3), worin ein Behälter (4) zur Aufnahme von Wäschestücken, eine Prozessluftführung (5), welche mit dem Behälter (4) gekoppelt ist, wobei Prozessluft durch den Behälter (4) strömt, ein Wärmetauscher (6), welcher mit der Prozessluftführung (5) gekoppelt und zur Entfeuchtung der aus dem Behälter (4) austretenden Prozessluft ausgebildet ist, eine Heizung (8), welche mit der Prozessluftführung (5) gekoppelt und zur Aufheizung der Prozessluft ausgebildet ist, eine Kühlluftführung (10) zur Führung von Kühlluft aus einer Umgebung (2) des Hausgeräts (1) zum Kühlen des Wärmetauschers. (6), ein erster Luftauslass (13), durch welchen Kühlluft aus der Kühlluftführung (19) direkt in die Umgebung entlassbar ist, und ein zweiter Luftauslass (14), durch welchen Kühlluft aus der Kühlluftführung (10) in das Hausgerät (1) und durch Schlitze (18) in dem Gehäuse (3) zurück in die Umgebung (2) leitbar ist, angeordnet sind, **dadurch gekennzeichnet, dass** in der Kühlluftführung (10) eine Luftleitvorrichtung (16, 17) angeordnet ist, welche derart einstellbar ist, dass wahlweise die dem Wärmetauscher (6) zugeführte Kühlluft zumindest anteilig durch den ersten Luftauslass (13) oder zumindest anteilig durch den zweiten Luftauslass (14) leitbar ist, bei welchem Verfahren Prozessluft durch die Prozessluftführung (5) zirkuliert und mittels der Heizung (8) beheizt wird, und dabei die Luftleitvorrichtung (16, 17) zunächst derart eingestellt wird, dass die dem Wärmetauscher (6) zugeführte Kühlluft direkt aus dem Hausgerät (1) in die Umgebung (2) geleitet wird, und anschließend derart eingestellt wird, dass die dem Wärmetauscher (6) zugeführte Kühlluft in das Hausgerät (1) und durch die Schlitze (18) in die Umgebung (2) geleitet wird, und schließlich die Entfeuchtung durch Beenden des Beheizens der Prozessluft beendet wird.

15. Verfahren zum Leiten von Kühlluft in einem Hausgerät (1) zur Pflege von Wäschestücken, umfassend ein Gehäuse (3), worin ein Behälter (4) zur Aufnahme von Wäschestücken, eine Prozessluftführung (5), welche mit dem Behälter (4) gekoppelt ist, wobei Prozessluft durch den Behälter (4) strömt, ein Wärmetauscher (6), welcher mit der Prozessluftführung (5) gekoppelt und zur Entfeuchtung der aus dem Behälter (4) austretenden Prozessluft ausgebildet ist, eine Heizung (8), welche mit der Prozessluftfühi rung (5) gekoppelt und zur Aufheizung der Prozessluft ausgebildet ist, eine Kühlluftführung (10) zur Führung von Kühlluft aus einer Umgebung (2) des Hausgeräts (1) zum Kühlen des Wärmetauschers (6), ein ester Luftauslass (13), durch welchen Kühlluft aus der Kühlluftführung (19) direkt in die Umgebung entlassbar ist, und ein zweiter Luftauslass (14), durch welchen Kühlluft aus der Kühlluftführung (10) in das Hausgerät (1) und durch Schlitze (18) in dem Gehäuse (3) zurück in die Umgebung (2) leitbar ist, angeordnet sind, **dadurch gekennzeichnet, dass** in der Kühlluftführung (10) eine Luftleitvorrichtung (16, 17) angeordnet ist, welche derart einstellbar ist, dass wahlweise im wesentlichen keine Kühlung des Wärmetauschers (6) erfolgt, oder die dem Wärmetauscher (6) zugeführte Kühlluft zumindest anteilig durch den ersten Luftauslass (13) oder zumindest anteilig durch den zweiten Luftauslass (14) leitbar ist, bei welchem Verfahren Prozessluft durch die Prozessluftführung (5) zirkuliert und mittels der Heizung (8) beheizt wird, und dabei die Luftleitvorrichtung (16, 17) zunächst derart eingestellt wird, dass zwecks Aufheizung des Hausgeräts (1) keine Kühlung des Wärmetauschers (6) erfolgt, dann derart eingestellt wird, dass die dem Wärmetauscher (6) zugeführte Kühlluft direkt aus dem Hausgerät (1) in die Umgebung (2) geleitet wird und anschließend derart eingestellt wird, dass die dem Wärmetauscher (6) zugeführte Kühlluft in das Hausgerät (1) und durch die Schlitze (18) in die Umgebung (2) geleitet wird, und schließlich die Entfeuchtung durch Beenden des Beheizens der Prozessluft beendet wird.

16. Verfahren nach einem der Ansprüche 14 und 15, bei dem zum Beenden der Entfeuchtung die Luftleitvorrichtung (16, 17) derart eingestellt wird, dass die dem Wärmetauscher (6) zugeführte Kühlluft direkt aus dem Hausgerät (1) in die Umgebung (2) geleitet wird.

## Claims

1. Domestic appliance (1) for care of laundry items, comprising a housing (3), in which are arranged a container (4) for receiving laundry items, a process air guide (5) coupled with the container (4), wherein process air flows through the container (4), a heat exchanger (6) which is coupled with the process air guide (5) and constructed for removal of moisture from process air exiting from the container (4), a heater (8) which is coupled with the process air guide (5) and constructed for heating the process air, a cooling air guide (10) for guidance of cooling air from an environment (2) of the domestic appliance (1) for cooling of the heat exchanger (6), a first air outlet (13) through which cooling air is dischargeable from the cooling air guide (10) directly into the environment, and a second air outlet (14) through which cooling air can be conducted out of the cooling air guide (10) into the domestic appliance (1) and through slots (18) in the housing (3) back into the environment (2), **characterised by** an air guide device (16, 17) which is arranged in the cooling air guide (10) and which is settable in such a manner that the cooling air fed to the heat exchanger (6) can be selectably conducted at least proportionally through the first air outlet (13) or at least proportionally through the second air outlet (14).

2. Domestic appliance (1) according to claim 1, in which the air guide device (16, 17) is settable in such a manner that in addition selectably substantially no cooling of the heat exchanger (6) takes place.

3. Domestic appliance (1) according to one of the preceding claims, in which the air guide device (16, 17) is arranged downstream of the heat exchanger.

4. Domestic appliance (1) according to any one of the preceding claims, in which the air guide device (16, 17) comprises a valve device (16) which is constructed for at least partial blocking or freeing of the two air outlets (13, 14) for conducting the cooling air.

5. Domestic appliance (1) according to claim 4, in which the air outlets (13, 14) open at a common junction point (15) at which the valve device (16) is arranged.

6. Domestic appliance (1) according to one of claims 4 and 5, in which the valve device (16) is controllable by a control unit (17).

7. Domestic appliance (1) according to claim 6, in which the valve device (16) is controllable in dependence on time and/or temperature.

8. Domestic appliance (1) according to claim 7, in which a first temperature measuring unit (19) for detection of the temperature of the laundry items is arranged, wherein the valve device (16) is controllable in dependence on this temperature of the laundry items.

9. Domestic appliance (1) according to one of claims 7 and 8, in which a second temperature measuring unit (20) for detection of the temperature of the cooling air after the heat exchanger (6) is arranged, wherein the valve device (16) is controllable in dependence on this temperature of the cooling air.

10. Domestic appliance (1) according to one of claims 8 and 9, in which at least one of the temperature measuring units (19, 20) is a temperature sensor or a thermostat.

11. Domestic appliance (1) according to any one of the preceding claims, in which a cooling fan (9) is included in the cooling air guide (10), wherein the air guide device (16, 17) is arranged adjacent to the cooling air fan (9).

12. Domestic appliance (1) according to any one of the preceding claims, in which a process air fan (7) is included in the process air guide (5).

13. Domestic appliance (1) according to claim 11 and claim 12, which comprises a drive unit (12), particularly a motor, constructed for drive of the container (4), the cooling air fan (9) and the process air fan (7).

14. Method of conducting cooling air in a domestic appliance (1) for care of laundry items, comprising a housing (3), in which are arranged a container (4) for receiving laundry items, a process air guide (5) coupled with the container (4), wherein process air flows through the container (4), a heat exchanger (6) which is coupled with the process air guide (5) and constructed for removal of moisture from process air exiting from the container (4), a heater (8) which is coupled with the process air guide (5) and constructed for heating the process air, a cooling air guide (10) for guidance of cooling air from an environment (2) of the domestic appliance (1) for cooling of the heat exchanger (6), a first air outlet (13) through which cooling air is dischargeable from the cooling air guide (10) directly into the environment, and a second air outlet (14) through which cooling air can be conducted out of the cooling air guide (10) into the domestic appliance (1) and through slots (18) in the housing (3) back into the environment (2), **characterised in that** arranged in the cooling air guide (10) is an air guide device (16, 17) which is settable in such a manner that the cooling air fed to the heat exchanger (6) can be selectably conducted at least proportionally through the first air outlet (13) or at least proportionally through the second air outlet (14), in which method process air circulates through the process air guide (5) and is heated by means of the heater (8), and **in that** case the air guide device (16, 17) is initially set in such a manner that the cooling air fed to the heat exchanger (6) is conducted directly from the domestic appliance (1) into the environment (2), and subsequently is set in such a manner that the cooling air fed to the heat exchanger (6) is conducted into the domestic appliance (1) and through the slots (18) into the environment (2), and subsequently the moisture removal is concluded by terminating the heating of the process air.

15. Method of conducting cooling air in a domestic appliance (1) for care of laundry items, comprising a housing (3), in which are arranged a container (4) for receiving laundry items, a process air guide (5) coupled with the container (4), wherein process air flows through the container (4), a heat exchanger (6) which is coupled with the process air guide (5) and constructed for removal of moisture from process air exiting from the container (4), a heater (8) which is coupled with the process air guide (5) and constructed for heating the process air, a cooling air guide (10) for guidance of cooling air from an environment (2) of the domestic appliance (1) for cooling of the heat exchanger (6), a first air outlet (13) through which cooling air is dischargeable from the cooling air guide (10) directly into the environment, and a second air outlet (14) through which cooling air can be conducted out of the cooling air guide (10) into the domestic appliance (1) and through slots (18) in the housing (3) back into the environment (2), **characterised in that** arranged in the cooling air guide (10) is an air guide device (16, 17) which is settable in such a manner that selectably substantially no cooling of the heat exchanger (6) takes place or the cooling air fed to the heat exchanger (6) can be conducted at least proportionally through the first air outlet (13) or at least proportionally through the second air outlet (14), in which method process air circulates through the process air guide (5) and is heated by means of the heater (8), and **in that** case the air guide device (16, 17) is initially set in such a manner that for the purpose of heating the domestic appliance (1) no cooling of the heat exchanger (6) takes place, then is set in such a manner that the cooling air fed to the heat exchanger (6) is conducted directly from the domestic appliance (1) into the environment (2), and subsequently is set in such a manner that the cooling air fed to the heat exchanger (6) is conducted into the domestic appliance (1) and through the slots (18) into the environment (2), and subsequently the moisture removal is concluded by terminating the heating of the process air.

16. Method according to one of claims 14 and 15, in which for terminating the moisture removal the air guide device (16, 17) is set in such a manner that the cooling air fed to the heat exchanger (6) is conducted directly from the domestic appliance (1) into the environment (2).

## Revendications

1. Appareil ménager (1) destiné à l'entretien de pièces de linge, comprenant un boîtier (3), dans lequel sont disposés un réservoir (4) pour le logement de pièces de linge, un dispositif de guidage d'air de processus (5), lequel est couplé au réservoir (4), l'air de processus circulant à travers le réservoir (4), un échangeur de chaleur (6), lequel est couplé au dispositif de guidage d'air de processus (5) et est réalisé pour la déshumidification de l'air de processus sortant du réservoir (4), un chauffage (8), lequel est couplé au dispositif de guidage de processus (5) et est réalisé pour échauffer l'air de processus, un dispositif de guidage d'air de refroidissement (10) destiné à guider l'air de refroidissement à partir d'un environnement (2) de l'appareil ménager (1) pour refroidir l'échangeur de chaleur (6), une première sortie d'air (13), à travers laquelle l'air de refroidissement peut être évacué directement dans l'environnement à partir du dispositif de guidage d'air de refroidissement (10), et une seconde sortie d'air (14), à travers laquelle l'air de refroidissement peut être guidé dans l'appareil ménager (1) à partir du dispositif de guidage d'air de refroidissement (10) et ramené dans l'environnement (2) à travers des fentes (18) présentes dans le boîtier (3), **caractérisé par** un dispositif de guidage d'air (16, 17) disposé dans le dispositif de guidage d'air de refroidissement (10), lequel dispositif de guidage d'air est réglable de manière à ce qu'au choix, l'air de refroidissement amené à l'échangeur de chaleur (6) puisse être guidé au moins proportionnellement à travers la première sortie d'air (13) ou au moins proportionnellement à travers la seconde sortie d'air (14).

2. Appareil ménager (1) selon la revendication 1, dans lequel le dispositif de guidage d'air (16, 17) est réglable de manière à ce qu'en plus, au choix, il n'y ait essentiellement pas de refroidissement de l'échangeur de chaleur (6).

3. Appareil ménager (1) selon l'une quelconque des revendications précédentes, dans lequel le dispositif de guidage d'air (16, 17) est disposé en aval de l'échangeur de chaleur (6).

4. Appareil ménager (1) selon l'une quelconque des revendications précédentes, dans lequel le dispositif de guidage d'air (16, 17) comprend un dispositif de vanne (16) lequel est réalisé pour l'obturation ou la libération au moins partielle des deux sorties d'air (13, 14) pour le guidage de l'air de refroidissement.

5. Appareil ménager (1) selon la revendication 4, dans lequel les sorties d'air (13, 14) aboutissent en un point de jonction (15), sur lequel est disposé le dispositif de vanne (16).

6. Appareil ménager (1) selon l'une quelconque des revendications 4 et 5, dans lequel le dispositif de vanne (16) est commandable au moyen d'une unité de commande (17).

7. Appareil ménager (1) selon la revendication 6, dans lequel le dispositif de vanne (16) est commandable en fonction du temps ou en fonction de la température.

8. Appareil ménager (1) selon la revendication 7, dans lequel une première unité de mesure de température (19) est disposée pour enregistrer la température des pièces de linge, le dispositif de vanne (16) étant commandable en fonction de cette température des pièces de linge.

9. Appareil ménager (1) selon l'une quelconque des revendications 7 et 8, dans lequel une seconde unité de mesure de température (20) est disposée en aval de l'échangeur de chaleur (6) pour enregistrer la température de l'air de refroidissement, le dispositif de vanne (16) étant commandable en fonction de cette température de l'air de refroidissement.

10. Appareil ménager (1) selon l'une quelconque des revendications 8 et 9, dans lequel au moins une des unités de mesure de température (19, 20) est un capteur de température ou un thermostat.

11. Appareil ménager (1) selon l'une quelconque des revendications précédentes, dans lequel un ventilateur d'air de refroidissement (9) est compris dans le dispositif de guidage d'air de refroidissement (10), le dispositif de guidage d'air (16, 17) étant disposé de manière avoisinante au ventilateur d'air de refroidissement (9).

12. Appareil ménager (1) selon l'une quelconque des revendications précédentes, dans lequel un ventilateur d'air de processus (7) est compris dans le dispositif de guidage d'air de processus (5).

13. Appareil ménager (1) selon la revendication 11 et la revendication 12, lequel présente une unité d'entraînement (12), notamment un moteur, lequel est réalisé pour l'entraînement du réservoir (4), du ventilateur d'air de refroidissement (9) et du ventilateur d'air de processus (7).

14. Procédé de guidage de l'air de refroidissement dans un appareil ménager (1) destiné à l'entretien des pièces de linge, comprenant un boîtier (3), dans lequel sont disposés un réservoir (4) pour le logement des pièces de linge, un dispositif de guidage d'air de processus (5), lequel est couplé au réservoir (4), l'air de processus circulant à travers le réservoir (4), un échangeur de chaleur (6), lequel est couplé au dispositif de guidage d'air de processus (5) et est réalisé pour la déshumidification de l'air de processus sortant du réservoir (4), un chauffage (8), lequel est couplé au dispositif de guidage de processus (5) et est réalisé pour échauffer l'air de processus, un dispositif de guidage d'air de refroidissement (10) destiné à guider l'air de refroidissement à partir d'un environnement (2) de l'appareil ménager (1) pour refroidir l'échangeur de chaleur (6), une première sortie d'air (13), à travers laquelle l'air de refroidissement peut être évacué directement dans l'environnement à partir du dispositif de refroidissement d'air (10), et une seconde sortie d'air (14), à travers laquelle l'air de refroidissement peut être guidé dans l'appareil ménager (1) à partir du dispositif de guidage d'air de refroidissement (10) et être ramené dans l'environnement (2) à travers des fentes (18) présentes dans le boîtier (3), **caractérisé en ce qu'**un dispositif de guidage d'air (16, 17) est disposé dans le dispositif de guidage d'air de refroidissement (10), lequel dispositif de guidage d'air est réglable de manière à ce qu'au choix, l'air de refroidissement amené à l'échangeur de chaleur (6) puisse être guidé au moins proportionnellement à travers la première sortie d'air (13) ou au moins proportionnellement à travers la seconde sortie d'air (14), dans lequel procédé l'air de processus circule à travers le dispositif de guidage d'air de processus (5) et est échauffé au moyen du chauffage (8), et le dispositif de guidage d'air (16, 18) étant d'abord réglé de manière à ce que l'air de refroidissement amené à l'échangeur de chaleur (6) puisse être guidé directement dans l'environnement (2) à partir de l'appareil ménager (1) et étant ensuite réglé de manière à ce que l'air de refroidissement amené à l'échangeur de chaleur (6) soit guidé dans l'environnement (2) à travers les fentes (18) et que finalement la déshumidification soit terminée par l'achèvement de l'échauffement de l'air de processus.

15. Procédé de guidage de l'air de refroidissement dans un appareil ménager (1) destiné à l'entretien des pièces de linge, comprenant un boîtier (3), dans lequel sont disposés un réservoir (4) pour le logement des pièces de linge, un dispositif de guidage d'air de processus (5), lequel est couplé au réservoir (4), l'air de processus circulant à travers le réservoir (4), un échangeur de chaleur (6), lequel est couplé au dispositif de guidage d'air de processus (5) et est réalisé pour la déshumidification de l'air de processus sortant du réservoir (4), un chauffage (8), lequel est couplé au dispositif de guidage d'air de processus (5) et est réalisé pour échauffer l'air de processus, un dispositif de guidage d'air de refroidissement (10) destiné à guider l'air de refroidissement à partir d'un environnement (2) de l'appareil ménager (1) pour refroidir l'échangeur de chaleur (6), une première sortie d'air (13), à travers laquelle l'air de refroidissement peut être évacué directement dans l'environnement à partir du dispositif de refroidissement d'air (10), et une seconde sortie d'air (14), à travers laquelle l'air de refroidissement peut être guidé dans l'appareil ménager (1) à partir du dispositif de guidage d'air de refroidissement (10) et être ramené dans l'environnement (2) à travers des fentes (18) présentes dans le boîtier (3), **caractérisé en ce qu'**un dispositif de guidage d'air (16, 17) est disposé dans le dispositif de guidage d'air de refroidissement (10), lequel dispositif de guidage d'air est réglable de manière à ce qu'au choix, il n'y ait essentiellement aucun refroidissement de l'échangeur de chaleur (6), ou que l'air de refroidissement amené à l'échangeur de chaleur (6) puisse être guidé au moins proportionnellement à travers la première sortie d'air (13) ou au moins proportionnellement à travers la seconde sortie d'air (14), dans lequel procédé l'air de processus circule à travers le dispositif de guidage d'air de processus (5) et est échauffé au moyen du chauffage (8), et le dispositif de guidage d'air (16, 18) étant d'abord réglé de manière à ce que, dans le but de chauffer l'appareil ménager (1), il n'y ait pas de refroidissement de l'échangeur de chaleur (6), puis étant réglé de manière à ce que l'air de refroidissement amené à l'échangeur de chaleur (6) soit guidé directement dans l'environnement (2) à partir de l'appareil ménager (1), et étant ensuite réglé de manière à ce que l'air de refroidissement amené à l'échangeur de chaleur (6) soit guidé dans l'appareil ménager (1) et dans l'environnement (2) à travers les fentes (18), et à ce que finalement la déshumidification soit terminée en raison de l'achèvement de l'échauffement de l'air de processus.

16. Procédé selon l'une quelconque des revendications 14 et 15, dans lequel, pour achever la déshumidification, le dispositif de guidage d'air (16, 17) est réglé de manière à ce que l'air de refroidissement amené à l'échangeur de chaleur (6) soit guidé directement dans l'environnement (2) à partir de l'appareil ménager (1).
